# EUROPEAN PATENT APPLICATION

(11) **EP 1 707 261 A1**
(43) Date of publication of application: **04.10.2006**
(21) Application number: 06006432.6
(22) Date of filing: 28.03.2006
(51) Int. Cl.: B01J 23/46, B01J 23/10, H01M 8/06, B01D 53/86, B01D 53/94, C01B 3/58

(54) **Catalyst for removal of carbon monoxide from hydrogen gas**

(30) Priority: 29.03.2005 JP 2005095569
(71) Applicant: N.E. Chemcat Corporation, Minato-ku, Tokyo (JP)
(72) Inventor: Yoshimura, Masatoshi, c/o N.E. Chemcat Corporation, Ichikawa-shi, Chiba-ken (JP)
(74) Representative: von Füner, Nicolai

(57) **Abstract**

A catalyst for removal of carbon monoxide from a hydrogen-containing gas that contains carbon monoxide, is provided. The catalyst includes a metal oxide-containing carrier, and a ruthenium component and a lanthanide component both supported on said carrier. Carbon monoxide can be removed from the hydrogen-containing gas with methanation reactions suppressed over a wide temperature range by bringing the gas into contact with oxygen in the presence of said catalyst.

## Description

### BACKGROUND OF THE INVENTION

### 1. Field of the Invention

The present invention relates to a carbon monoxide (hereinafter referred to as CO) removal catalyst that is used for removing CO contained in a hydrogen-containing gas such as a reformed gas by converting the CO to carbon dioxide (hereinafter referred to as CO₂) via selective oxidation.

### 2. Description of the Prior Art

Fuel cells have such various advantages that they basically generate no pollutant, are low in energy loss and are advantageous in selection of installation location, expansion, handling and the like. Among these cells, solid polymer fuel cells which are operational at low temperatures have begun to attract considerable attention. Solid polymer fuel cells have electrodes consisting of an anode and a cathode, and hydrogen (a fuel) is supplied to the anode and oxygen or air (an oxidizer) is supplied to the cathode to generate electric power via a solid electrolyte membrane (a proton exchange membrane). Examples of the catalysts used at the electrodes (at both the anode and the cathode) include platinum black and a catalyst in which platinum or a platinum alloy is supported on a carbon carrier.

The hydrogen used for fuel cells such as solid polymer fuel cells may be obtained as a reformed gas by mixing a hydrocarbon fuel such as methane, propane or kerosene or an alcoholic fuel such as methanol with steam or with steam and air and reacting them at an elevated temperature in the presence of a reforming catalyst (refer to non-patent reference 1). This reaction is usually known as a steam reforming reaction.

In the steam reforming reaction, however, CO generates in addition to hydrogen. If the reformed gas obtained by said reaction is used as a fuel for the solid polymer fuel cells, the electrode catalyst (particularly the anode catalyst) is poisoned by the CO contained in the reformed gas, thereby decreasing the performance of the cell (refer to non-patent reference 2).

The concentration of CO in a reformed gas is usually approximately 10% by volume. In order to prevent the electrode catalyst from poisoning by CO, it is necessary to remove the CO contained in the reformed gas as much as possible, preferably to a concentration as low as 10 ppm or less. Examples of the processes for removing CO include, for example, a process in which oxygen is introduced into the reaction system in the presence of a catalyst, thereby selectively oxidizing the CO to CO₂ for subsequent removal (CO selective oxidation reaction, equation (1) shown below), and a process in which a water gas shift reaction is caused to occur in the presence of a catalyst (the equation (2) shown below).

### [CO Selective Oxidation Reaction]

CO + 1/2O₂→ CO₂ (1)

### [Water Gas Shift Reaction]

CO + H₂O ⇔CO₂ + H₂ (2)

In the CO selective oxidation reaction, however, it is usually necessary to use oxygen in a quantity not less than stoichiometric quantity and excess oxygen may react with hydrogen in the reaction system to consume the aimed hydrogen (equation (3) shown below).

H₂ + 1/2O₂ → H₂O (3)

In order to avoid such problem, a process has usually been employed, in which, after removing a major part of CO by a water gas shift reaction, oxygen (or air) is added to a reaction system to remove remaining CO by CO selective oxidation reaction. In this case, a highly selective catalyst is required because CO and hydrogen coexist in the system. As the catalyst are known platinum (Pt) catalysts, ruthenium (Ru) catalysts and the like.

Platinum catalysts are advantageous in that they do not cause methanation of CO represented by the following equation (4). However, they have a defect that they cannot sufficiently decrease the CO concentration because as the temperature of the catalyst raises, selectivity of the CO selective oxidation lowers and a reverse shift reaction (formula (2) shown above) occurs to produce fresh CO (refer to non-patent reference 3).

On the other hand, ruthenium catalysts are liable to cause methanation of CO as a side-reaction at a high temperature and are also liable to cause methanation of CO₂ represented by the following equation (5). The catalysts have such a defect that a large amount of hydrogen is consumed by these methanation reactions and thus the yield of hydrogen lowers. Particularly methanation of CO₂ is accompanied by strong exothermic heat to cause a rapid temperature raise, whereby control of the reaction becomes difficult.

### [Methanation Reaction]

CO + 3H₂ → CH₄ + H₂O (4)

CO₂ + 4H₂ → CH₄ + 2H₂O (5)

Under such circumstances, it has been proposed to have ruthenium and an alkali metal compound and/or an alkaline earth compound supported on an inorganic oxide carrier to solve the problems that the ruthenium catalysts have and to suppress the methanation activity (refer to patent reference 1).

[Patent Reference 1] JP9-131531A

[Non-Patent Reference 1] "Handbook of Fuel Cells", Wiley, 2000, Vol. 3. pp 129-242

[Non-Patent Reference 2] J. Power Sources, S. Srinivasan et al., 1990, Vol. 29, p.367

[Non-Patent Reference 3] "Handbook of Fuel Cells", Wiley, 2000, Vol. 3. p. 213

### SUMMARY OF THE INVENTION

An object of the present invention is to provide a catalyst which can suppress the methanation reaction in the CO selective oxidation and can reduce the CO concentration of a hydrogen-containing gas over a wide temperature range.

In order to solve the above-mentioned problem, the present invention first provides a catalyst for removal of CO from a hydrogen-containing gas that contains CO, which comprises a metal oxide-containing carrier and a ruthenium component and a lanthanoid component both supported on said carrier.

Secondarily, the present invention provides a method for removing CO from a hydrogen-containing gas that contains CO which comprises contacting the hydrogen-containing gas with oxygen in the presence of the aforementioned catalyst.

The CO removal catalyst and the CO removal method according to the present invention enable suppression of methanation of CO during removal of CO contained in a hydrogen-containing gas via a CO selective oxidation reaction, thereby reducing the CO concentration of the hydrogen-containing gas over a wide temperature range. In addition, a side reaction, methanation of CO₂, which is liable to occur at high temperatures can be suppressed.

Accordingly, the CO removal catalyst and the method for removing CO according to the present invention are useful particularly for purification of hydrogen gas used as a fuel for fuel cells, thereby leading to achieving good fuel utilization efficiency and good power generation efficiency.

### DETAILED DESCTIPTION OF THE PREFERRED EMBODIMENTS

The catalyst of the present invention is used for removal of CO contained in a hydrogen-containing gas. A detailed description is given below.

### -Hydrogen-containing Gas-

The "hydrogen-containing gas" to which the catalyst of the present invention is applied herein means a gas that contains CO together with hydrogen. Typically, the gas contains hydrogen as a main component, CO as an unnecessary component or impurity, and usually CO₂ and steam (water). Specifically, a reformed gas generated by a steam reforming reaction or the like is exemplified.

### -CO Removal Catalyst-

The CO removal catalyst of the present invention comprises a carrier containing a metal oxide, and a ruthenium component and a lanthanoid component both supported on the carrier.

### • Carrier

The carrier used for the catalyst of the present invention contains a metal oxide and usually consists of metal oxides. The size of the carrier is not particularly restricted, but is usually in a range of approximately from 2 to 4 mm in particle diameter. The shape and the structure of the carrier are not particularly restricted. Examples of the shape include the forms of powder, sphere, granule, honeycomb, foam, fiber, cloth, plate, ring and the like, with granular or pellet-like form being preferred. Examples of the structure include porous structure.

Examples of the metal oxides include alumina, silica, zirconia, titania, silica-alumina, zeolite and ceria. Of these, alumina or silica is preferred, and alumina is more preferred. The alumina may be, for example, *α* -, *β* -, *γ* -, δ -, *X* -, *η* -, *θ* - or *K* -alumina and is not particularly restricted although *γ* -alumina is preferred because it has a high specific surface and is inexpensive. These metal oxides may be used singly or in combination of two or more thereof.

### • Ruthenium Component

The catalyst of the present invention first carries a ruthenium component as a catalytic active component supported on the above-mentioned carrier. The ruthenium component may be supported on the above-mentioned carrier in the state of metal, a compound such as an oxide or combination thereof. Although ruthenium is readily oxidized on its surface in air at room temperature, it is considered that it returns to a metallic state under the conditions assumed in the present invention.

The quantity of the supported ruthenium component is usually in a range of from 0.01 to 10% by weight, preferably from 0.01 to 5.0% by weight, more preferably from 0.1 to 3.0% by weight based on the catalyst of the present invention in terms of elemental ruthenium. If the quantity of ruthenium is within the above range, it is possible to obtain a catalytic activity sufficient to remove CO from a hydrogen-containing gas by converting the CO in the hydrogen-containing gas to CO₂ via a CO selective oxidation reaction. In addition, the quantity in said range is preferable from an economical viewpoint.

There is no particular restriction on the method for supporting the ruthenium component on the carrier, and conventional methods (i.e. impregnation method, coprecipitation method, competitive adsorption method or the like) can be employed. Specifically, for example, an aqueous solution of ruthenium acetate, ruthenium nitrosyl nitrate, ruthenium chloride or the like or an optional combination thereof is added dropwise to the carrier to impregnate the carrier with the aqueous solution, and then an aqueous ammonium solution or hydrazine is added thereto to reduce the ruthenium, whereby allowing the metallic ruthenium to be supported on the carrier. The carrier thus obtained may be sufficiently washed with water and dried at a temperature of from 100 to 110°C.

### • Lanthanoid Component

The catalyst of the present invention secondarily carries as an auxiliary catalyst component a lanthanoid component on the carrier supporting the ruthenium component. The lanthanoid component may be supported on the carrier in the state of metal, compound such as an oxide or combination thereof. Since the lanthanoid component is oxidized in air, it is presumed that the lanthanoid component is supported on the carrier in the state of an oxide under the conditions assumed in the present invention.

A lanthanoid element that constitutes the lanthanoid component is lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), Ytterbium (Yb) or lutetium (Lu). These elements may be used singly or in combination of two or more. Of these, it is preferable that the lanthanoid component comprises lanthanum, cerium, praseodymium, neodymium, samarium, gadolinium or a combination of two or more thereof.

The quantity of the supported lanthanoid component is usually in a range of from 0.01 to 20% by weight, preferably from 0.01 to 10% by weight, more preferably from 0.1 to 10% by weight based on the catalyst of the present invention in terms of elemental lanthanoid. If the quantity is within the above range, it is possible to sufficiently suppress the methanation reactions and to enhance the selectivity of CO oxidation of the catalyst.

In a preferred embodiment, the ratio of the supported lanthanoid component to the supported ruthenium component is desirably in a range of from 20:1 to 1:20, particularly from 10:1 to 1:2 in terms of elemental weight ratio from the standpoint of obtaining such remarkable effects that the methanation reactions can be suppressed and the CO concentration in the hydrogen-containing gas can be reduced over a wide temperature range.

There is no particular restriction on the method for supporting the lanthanoid component on the carrier, and conventional methods (i.e. impregnation method, coprecipitation method, competitive adsorption method or the like) can be employed. Specifically, for example, an aqueous solution of a metal salt containing the above-mentioned lanthanoid element such as a nitrate, for example, lanthanum nitrate, cerium nitrate, praseodymium nitrate, neodymium nitrate, samarium nitrate or gadolinium nitrate, or a acetate, for example, lanthanum acetate, cerium acetate, praseodymium acetate, neodymium acetate, samarium acetate or gadolinium acetate, a hydrate thereof or a combination thereof is added dropwise to the carrier that supports the ruthenium component, and after impregnating the carrier with the aqueous solution, the resulting carrier is dried at a temperature of 100 to 110°C and then calcined at a temperature of 300 to 700°C, preferably 400 to 600°C for a period between 30 minutes and 2 hours under a mixed gas atmosphere composed of a reducing gas (hydrogen) and an inert gas (nitrogen). By this procedure, it is possible to prepare a catalyst in which the lanthanoid component is supported on the carrier in a state of a metallic lanthanoid, an oxide or a combination thereof.

As the inert gas may be mentioned argon, helium or the like, as well as nitrogen. The atmosphere under which the calcination is effected may be composed of 100 % of a reducing gas (hydrogen) or 100 % of an inert gas. It is preferred, however, to use a reducing atmosphere in view of the characteristics of the catalyst.

### • Order of Supporting

Although the procedure in which the ruthenium component is at first supported on the carrier and then the lanthanoid component is supported thereon is explained in the above as an example, there is no restriction on the order of supporting the ruthenium component and the lanthanoid component. Namely, the lanthanoid component may be first supported on the carrier and then the ruthenium component may be supported thereon, or alternatively the ruthenium component and the lanthanoid component may be simultaneously supported on the carrier. The catalyst of the present invention can be prepared by having the ruthenium component and the lanthanoid component supported on the carrier in either order. Regardless of the supporting order, the resulting catalyst exhibits similarly excellent effects.

### • Embodiment of Catalyst

In an embodiment, the catalyst of the present invention further comprises a honeycomb support on which the afore-stated ruthenium and lanthanoid component-supported carrier is supported. Examples of the honeycomb support include an integral structural support made of cordierite, a metal or the like. Specifically, a powdery catalyst may be coated on a honeycomb support made of cordierite and then used as a catalyst.

### -Method for Removal of CO-

The removal of CO from the hydrogen-containing gas using the catalyst of the present invention is effected by, for example, a method comprising contacting the hydrogen-containing gas that contains CO with oxygen in the presence of the above-mentioned catalyst. In this method, the oxygen may be oxygen singly or a mixture of oxygen and an inert gas and may be, for example, air. The above-mentioned contact is effected usually at a temperature of the hydrogen-containing gas of 100 to 240°C, preferably 120 to 200°C. It is preferable that the space velocity (SV) of the hydrogen-containing gas in the presence of the above-mentioned catalyst is in a range of from 100 to 100,000 h⁻¹, particularly from 1,000 to 20,000 h⁻¹.

### -Use-

While the catalyst and the method for removal of CO according to the present invention are particularly suitable for purification of the hydrogen gas (i.e. the hydrogen-containing gas) used as a fuel for fuel cells, they are also used for other applications.

### EXAMPLES

The present invention will now be described specifically with reference to examples which are not intended to restrict the present invention.

### <Example 1>

1.27 g of ruthenium chloride (manufactured by N. E. Chemcat Corporation, ruthenium content:42.27% by weight) was dissolved in 100 ml of pure water. Thereto was added 100 g of γ-alumina pellet (Trade name: KHA-24, manufactured by Sumitomo Chemical Co., Ltd.), and the resulting mixture was stirred on a rotary evaporator to evaporate the aqueous solution to dryness, thereby yielding a pellet-like mixture. The pellet-like mixture was then put in an aqueous hydrazine solution which had been prepared by dissolving 2.50 g of hydrazine monohydrate (manufactured by Wako Pure Chemical Industries, Ltd.) in 200 ml of pure water and soaked therein to reduce the ruthenium. The pellet-like mixture after reduction treatment was sufficiently washed with pure water, and dried at 110°C in air for 12 hours to give a ruthenium-supporting alumina carrier. Ruthenium was supported in a quantity of 0.5% by weight based on the total weight of the ruthenium-supporting alumina carrier in terms of elemental ruthenium.

To 100 g portion of the ruthenium-supporting alumina carrier was added 50 ml of an aqueous solution containing 9.4 g of lanthanum nitrate hexahydrate (manufactured by Wako Pure Chemical Industries, Ltd.). After sufficiently drying at 110°C, the resulting mixture was calcined at 500°C in the stream of a mixed gas composed of 10% by volume of hydrogen and 90% by volume of nitrogen under a reducing atmosphere to give catalyst 1 which carried 0.49% by weight of ruthenium and 3% by weight of lanthanum both in terms of element based on the total quantity of the catalyst.

### <Example 2>

Similarly to Example 1 except for using 9.3 g of cerium nitrate (manufactured by Wako Pure Chemical Industries, Ltd.) instead of 9.4 g of lanthanum nitrate hexahydrate (manufactured by Wako Pure Chemical Industries, Ltd.), a catalyst was prepared, which was referred to as catalyst 2. Catalyst 2 carried 0.49% by weight of ruthenium and 3% by weight of cerium both in terms of element based on the total quantity of the catalyst.

### <Example 3>

Similarly to Example 1 except for using 8.9 g of praseodymium nitrate hexahydrate (manufactured by Wako Pure Chemical Industries, Ltd.) instead of 9.4 g of lanthanum nitrate hexahydrate (manufactured by Wako Pure Chemical Industries, Ltd.), a catalyst was prepared, which was referred to as catalyst 3. Catalyst 3 carried 0.49% by weight of ruthenium and 3% by weight of praseodymium both in terms of element based on the total quantity of the catalyst.

### <Example 4>

Similarly to Example 1 except for using 9.1 g of neodymium nitrate hexahydrate (manufactured by Wako Pure Chemical Industries, Ltd.) instead of 9.4 g of lanthanum nitrate hexahydrate (manufactured by Wako Pure Chemical Industries, Ltd.), a catalyst was prepared, which was referred to as catalyst 4. Catalyst 4 carried 0.49% by weight of ruthenium and 3% by weight of neodymium both in terms of element based on the total quantity of the catalyst.

### <Example 5>

Similarly to Example 1 except for using 8.9 g of samarium nitrate hexahydrate (manufactured by Wako Pure Chemical Industries, Ltd.) instead of 9.4 g of lanthanum nitrate hexahydrate (manufactured by Wako Pure Chemical Industries, Ltd.), a catalyst was prepared, which was referred to as catalyst 5. Catalyst 5 carried 0.49% by weight of ruthenium and 3% by weight of samarium both in terms of element based on the total quantity of the catalyst.

### <Example 6>

Similarly to Example 1 except for using 8.6 g of gadolinium nitrate hexahydrate (manufactured by Wako Pure Chemical Industries, Ltd.) instead of 9.4 g of lanthanum nitrate hexahydrate (manufactured by Wako Pure Chemical Industries, Ltd.), a catalyst was prepared, which was referred to as catalyst 6. Catalyst 6 carried 0.49% by weight of ruthenium and 3% by weight of gadolinium both in terms of element based on the total quantity of the catalyst.

### <Comparative Example 1>

The procedure for producing ruthenium-supporting alumina carrier in Example 1 was similarly conducted. The resulting ruthenium-supporting alumina carrier was referred to as catalyst C1 for comparison.

### -Evaluation Test-

30 ml each of catalysts 1 to 6 and C1 obtained in the above was separately filled in a reaction tube (made of quartz) to provide a catalyst layer. Evaluation test as to CO selective oxidation was conducted using these tubes.

Into the reaction tube provided with the catalyst layer were introduced a simulated reformed gas composed of 0.5% by volume of CO, 16% by volume CO₂, 20% by volume of steam and a balance of hydrogen as a test gas and oxygen in a quantity 1.5 times the volume of the CO at a space velocity (SV) of 10,000 h⁻¹ or 7,500 h⁻¹. The temperature of the test gas introduced into the reaction tube was varied between 90°C and 200°C to evaluate on each case.

Then, after removing the steam from the treated gas which had passed through the reaction tube and discharged therefrom, the CO concentration and the methane concentration of the treated gas at the outlet of the reaction tube were measured using a gas analyzer (Trade name:Bex-2201E, non-dispersive infrared measurement method, manufactured by Best Instruments Co., Ltd.), and the CO₂ concentration was also monitored to thereby investigate the occurrence of CO₂ methanation.

Table 1 shows the relation between the temperature of the test gas at the inlet of the reaction tube and the CO concentration or methane concentration of the treated gas at the outlet of the reaction tube or presence or absence of generation of CO₂ methanation. In the evaluation of methanation of CO₂ in Table 1, when the methanation of CO₂ was not observed, the catalyst was evaluated to be good and was represented by "A", whereas when the methanation of CO₂ was observed, the catalyst was evaluated to be bad and represented by "B". Incidentally, a raise in the temperature of the catalyst was observed during the test.

**[Table 1]**

| | | SV (h⁻¹) | CO concentration(ppm) and methane concentration(ppm) of the treated gas at the outlet and generation of CO₂ methanation at each of the inlet gas temperatures | | | | | | | | |
|---|---|---|---|---|---|---|---|---|---|---|---|
| | | | 122°C | | | 149°C | | | 174°C | | |
| | | | CO | Methane | CO₂ | CO | Methane | CO₂ | CO | Methane | CO₂ |
| Example 1 | Catalyst 1 | 10000 | 4600 | 0 | A | 26 | 1810 | A | 50 | 2505 | A |
| | | 7500 | 0 | 405 | A | 0 | 800 | A | 0 | 1010 | A |
| Example 2 | Catalyst 2 | 10000 | 51 | 605 | A | 57 | 1255 | A | 62 | 2445 | A |
| Example 3 | Catalyst 3 | 10000 | 9 | 900 | A | 15 | 2015 | A | 20 | 3655 | A |
| Example 4 | Catalyst 4 | 10000 | 3 | 995 | A | 9 | 2020 | A | 22 | 3890 | A |
| Example 5 | Catalyst 5 | 10000 | 9 | 885 | A | 10 | 1815 | A | 16 | 3110 | A |
| Example 6 | Catalyst 6 | 10000 | 0 | 795 | A | 10 | 1675 | A | 17 | 3540 | A |
| Comparative Example 1 | Catalyst C1 | 10000 | 0 | 2365 | A | x | x | B | x | x | B |

| | | | | | | | | | | | |
|---|---|---|---|---|---|---|---|---|---|---|---|
| * The CO concentration (ppm) and the methane concentration (ppm) in the table are based on volume. | | | | | | | | | | | |
| * The mark "x" in the table shows that the CO concentration and the methane concentration could not be measured due to significant generation of CO₂ methanation. | | | | | | | | | | | |

### -Evaluation-

In the case where any one of catalysts 1 to 6 which was prepared in any of Examples 1 to 6 and carried the ruthenium component and the lanthanoid component was used, CO methanation at the inlet gas temperature of 122°C was remarkably suppressed and CO methanation at the other temperatures was reduced compared with the case where catalyst C1 which carried only the ruthenium component was used. In addition, CO₂ methanation was prevented at any of the inlet gas temperatures of 122°C, 149°C and 174°C.

Furthermore, when catalyst 1 was evaluated at SV of 7,500 h⁻¹, CO methanation was largely suppressed over a wide temperature range and the outlet CO concentration was reduced to 0 ppm.

## Claims

1. A catalyst for removal of carbon monoxide from a hydrogen-containing gas that contains carbon monoxide, which comprises a metal oxide-containing carrier and a ruthenium component and a lanthanoid component both supported on said carrier.

2. The catalyst according to claim 1, wherein the quantity of said ruthenium component relative to the weight of said catalyst is in a range of from 0.01 to 10% by weight in terms of elemental ruthenium.

3. The catalyst according to claim 1, wherein said lanthanoid component comprises lanthanum, cerium, praseodymium, neodymium, samarium, gadolinium or a combination of two or more thereof.

4. The catalyst according to claim 1, wherein the quantity of said lanthanoid component relative to the weight of said catalyst is in a range of from 0.01 to 20% by weight in terms of elemental lanthanoid.

5. The catalyst according to claim 1, wherein the ratio of the supported lanthanoid component to the supported ruthenium component is in a range of from 20:1 to 1:20.

6. The catalyst according to claim 1, wherein said metal oxide is at least one member selected from the group consisting of alumina, silica, zirconia, titania, silica-alumina, zeolite and ceria.

7. The catalyst according to claim 1, wherein said metal oxide is alumina or silica.
